# EUROPEAN PATENT APPLICATION

(11) **EP 2 056 635 A1**
(43) Date of publication of application: **06.05.2009**
(21) Application number: 08018822.0
(22) Date of filing: 28.10.2008
(51) Int. Cl.: H04W 28/02

(54) **Method of handling random access procedure failure and related communication device**

(30) Priority: 30.10.2007 US 983569 P
(71) Applicant: Innovative Sonic Limited, Tortola (VG)
(72) Inventor: Kuo, Richard Lee-Chee, Peitou Taipei City (TW)
(74) Representative: Görz, Ingo

(57) **Abstract**

A method of handling random access procedure failure for a user equipment in a radio resource control connected state in a wireless communication system includes initiating a random access procedure corresponding to uplink or downlink data arrival (402), and then, when the random access procedure fails, determining that a radio link failure is detected and performing a radio link recovery procedure (404).

## Description

This application claims the benefit of U.S. Provisional Application No. 60/938,569, filed on OCT 30, 2007 and entitled "Method and Apparatus for Improving Radio Link Failure and RRC Connection Procedure in a Wireless Communication System", the contents of which are incorporated herein.

The present invention relates to a method and apparatus for handling failure of a random access procedure in a wireless communications system according to the pre-characterizing clauses of claims 1 and 9.

The third generation (3G) mobile communications system has adopted a Wideband Code Division Multiple Access (WCDMA) wireless air interface access method for a cellular network. WCDMA can provide high frequency spectrum utilization, universal coverage, and high quality, high speed multimedia data transmission. The WCDMA method also meets all kinds of QoS (Quality of Service) requirements simultaneously, providing diverse flexible two-way transmission services and better communication quality to reduce transmission interruption rates.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simpler.

In the present LTE system, a user equipment (UE) needs to initiate a random access procedure for any of the following events. The events are: (1) Initial access from a RRC_IDLE state; (2) Initial access after a radio link failure; (3) Handover requiring random access procedure; (4) Downlink data arrival during a RRC_CONNECTED state requiring random access procedure; (5) Uplink data arrival during RRC_CONNECTED requiring random access procedure.

The random access procedure may be failed in the abovementioned events. However, the prior art LTE system specifications does not specify how the UE deals with failure of the random access procedure associated with the events (4) and (5). Thus, system errors are liable to occur in the UE when the random access procedure is initiated due to the events (4) and (5) and then failed.

This in mind, the present invention aims at providing a method and apparatus for handling failure of a random access procedure for a user equipment of a wireless communications system, so as to avoid system errors.

This is achieved by a method and apparatus for handling random access procedure failure in a wireless communications system according to claims 1 and 9. The dependent claims pertain to corresponding further developments and improvements.

As will be seen more clearly from the detailed description following below, the claimed method of handling random access procedure failure for a user equipment in an RRC_CONNECTED state in a wireless communications system comprises initiating a random access procedure corresponding to an uplink data arrival or a downlink data arrival, and then when the random access procedure is performed unsuccessfully, determining that a radio link failure is detected and then performing a radio link recovery procedure.

### Brief Description of the Drawings

Fig. 1 is a schematic diagram of a wireless communication system.
Fig. 2 is a functional block diagram of a wireless communication device.
Fig. 3 is a schematic diagram of program code shown in Fig. 2.
Fig. 4 is a flowchart diagram according to an embodiment of the present invention.

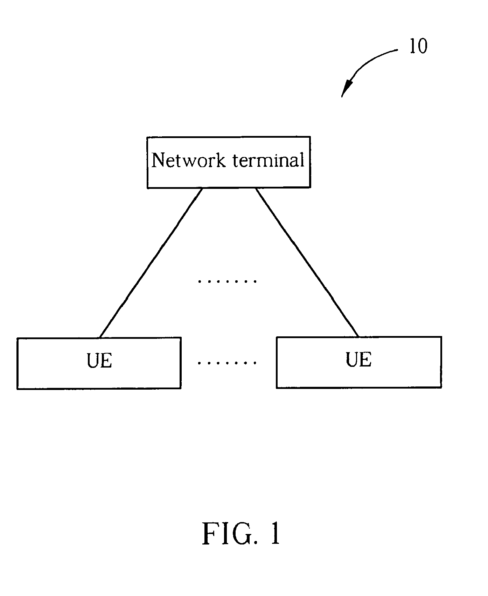

Please refer to FIG .1, which is a schematic diagram of a wireless communications system 10. The wireless communications system 10 is preferred to be a third generation (3G) mobile communications system, and is briefly formed with a network terminal and a plurality of user equipments. In FIG 1, the network terminal and the user equipments are simply utilized for illustrating the structure of the wireless communications system 10. Practically, the network terminal may include a plurality of evolved base stations (eNBs), an evolved UMTS radio access network (EUTRAN) and so on according to actual demands, and the user equipments (UEs) can be apparatuses such as mobile phones, computer systems, etc.

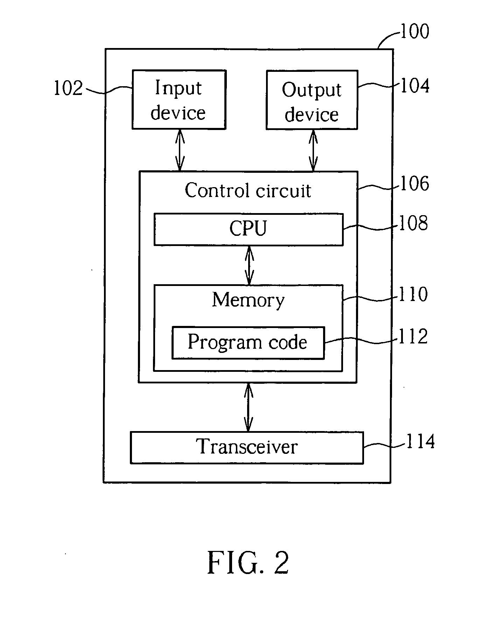

Please refer to FIG 2, which is a functional block diagram of a communications device 100. The communications device 100 can be utilized for realizing the UEs in FIG .1. For the sake of brevity, FIG 2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

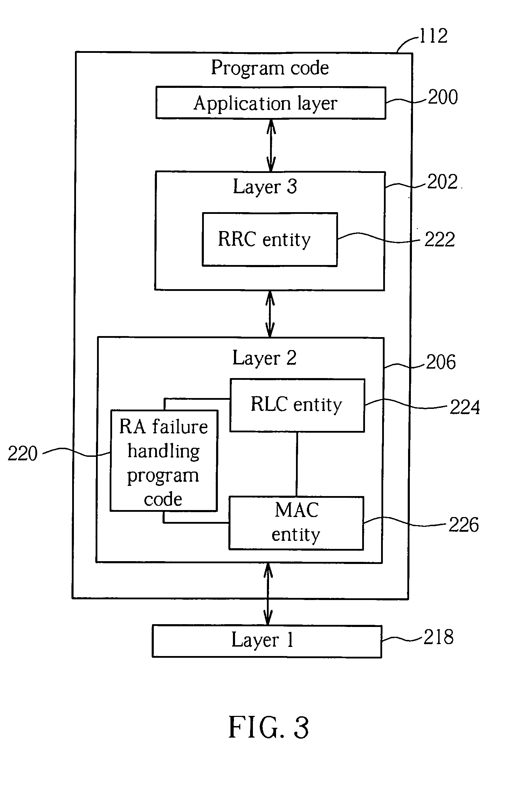

Please continue to refer to FIG 3. FIG 3 is a diagram of the program code 112 shown in FIG 2. The program code 112 includes an application layer 200, a Layer 3 202, and a Layer 2 206, and is coupled to a Layer 1 218. The Layer 3 202 includes a radio resource control (RRC) entity 222 for exchanging RRC messages with other communications device, such as the eNB or the EUTRAN, through RRC procedures and controlling the Layer 1 218 and the Layer 2 206 with the RRC messages and information elements (IEs) thereof. In addition, the RRC entity 222 can switch the communications device 100 between an RRC_IDLE and an RRC_CONNECTED state. The Layer 2 206 includes a radio link control (RLC) entity 224 that is capable of operating in an Acknowledged Mode (AM), a Unacknowledged Mode (UM) and a Transparent Mode (TM) for delivering packets from upper layers. A medium access control (MAC) 224 that is a lower entity of the RLC entity 224 is used for initiating a random access procedure for transmitting uplink configuration and information, such as a random access preamble, through a random access channel (RACH).

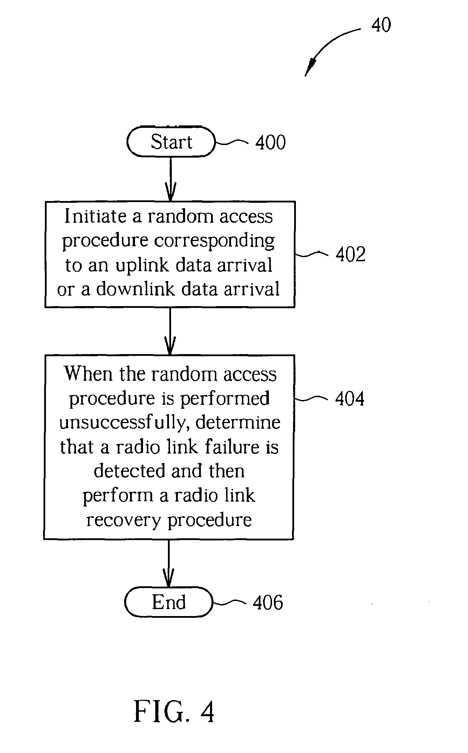

When the communications device 100 stays in the RRC_CONNECTED state, the embodiment of the present invention provides a RA failure handling program code 220 in the program code 112 to avoid system errors. Please refer to FIG. 4, which illustrates a schematic diagram of a process 40 according to an embodiment of the present invention. The process 40 is utilized for handling random access procedure failure for a UE of the wireless communications system 10, and can be compiled into the RA failure handling program code 220. The process 40 includes the following steps:
- Step 400:: Start.
- Step 402:: Initiate a random access procedure corresponding to an uplink data arrival or a downlink data arrival.
- Step 404:: When the random access procedure is performed unsuccessfully, determine that a radio link failure is detected and then perform a radio link recovery procedure.
- Step 406:: End.

According to the process 40, when the random access procedure is performed unsuccessfully (e.g. when no response of a sent random access preamble is received for a default time), the UE determines that a radio link failure is detected and then performs the radio link recovery procedure. When the radio link recovery procedure is performed successfully, the UE recovers a radio link. On the contrary, the UE leaves the RRC_CONNECTED state for the RRC_IDLE state. Preferably, the random access procedure is a contention-based random access procedure.

Preferably, the UE initiates the random access procedure corresponding to an uplink data arrival when any of the following conditions is met. The conditions are: (1) when the UE has uplink data to transmit and the uplink synchronization status is non-synchronized; (2) when the UE has uplink data to transmit and no dedicated scheduling request channel is available. In the condition (1), the non-synchronized uplink synchronization status means that different UEs served by an eNB have different round trip delays due to distance difference between the UEs and the eNB, thereby causing timing offsets. In other words, a synchronous uplink transmission indicates that the eNB is able to simultaneously receive uplink data from the served UEs.

Besides, the UE initiates the random access procedure corresponding to the downlink data arrival when receiving a downlink data arrival order from the eNB and uplink synchronization status is non-synchronized. The downlink data arrival order may be sent by the eNB in the situation where the eNB has downlink data to transmit and the uplink synchronization status is non-synchronized.

The abovementioned radio link recovery procedure includes the following steps. The UE performs base station selection first and then initiates a random access procedure corresponding to the radio link failure to retrieve uplink synchronization with a selected eNB. In the random access procedure, the UE exchanges specific messages with the eNB for radio link recovery. Message exchange is described as follows. A UE identifier is sent to the selected base station. When the UE identifier is found in the selected base station, the UE receives a response indicating that the radio link recovery procedure is performed successfully and then recovers the radio link. On the contrary, the UE receives a response indicating that the radio link recovery procedure is failed and then enters the RRC_IDLE state when the UE identifier is not found in selected base station. Furthermore, the UE determines that the radio link recovery procedure is failed and enters the RRC_IDLE state when the radio link recovery procedure is not finished during a predetermined time.

Through the abovementioned radio link recovery procedure, the UE in the RRC_CONNECTED state is able to accomplish the radio link recovery or enters the RRC_IDLE state when the radio link recovery is failed. As can be seen from the above, the UE re-establishes the radio link or enters the RRC_IDLE state through the radio link recovery procedure when the random access procedure is failed.

In conclusion, the embodiments of the present invention treat the random access procedure corresponding to an uplink data arrival or a downlink data arrival as the radio link failure to prevent system errors of the UE.

## Claims

1. A method of handling random access procedure failure for a user equipment in an RRC_CONNECTED state in a wireless communications system, the method comprising:
initiating a random access procedure corresponding to an uplink data arrival or a downlink data arrival (402); and
**characterized by** when the random access procedure is performed unsuccessfully, determining that a radio link failure is detected and then performing a radio link recovery procedure (404).

2. The method of claim 1, **characterized in that** the radio link recovery procedure comprises:
selecting a base station; and
initiating a random access procedure corresponding to the radio link failure with the base station.

3. The method of claim 2, **characterized in that** the random access procedure corresponding to the radio link failure comprises:
sending a user equipment identifier to the base station;
receiving a response indicating that the radio link recovery procedure is performed successfully and recovering a radio link with the base station when the user equipment identifier is found in the base station;
receiving a response indicating that the radio link recovery procedure is failed and entering an RRC_IDLE state when the user equipment identifier is not found in the base station; and
determining that the radio link recovery procedure is failed and entering the RRC_IDLE state when the radio link recovery procedure is not finished during a predetermined time.

4. The method of claim 1, **characterized in that** the method further comprises:
recovering a radio link when the radio link recovery procedure is successfully; and
entering the RRC_IDLE state when the radio link recovery procedure is failed.

5. The method of claim 1, **characterized in that** the random access procedure is a contention based random access procedure.

6. The method of claim 1, **characterized in that** performing the random access procedure corresponding to the uplink data arrival is performing the random access procedure when the user equipment has uplink data to transmit and the uplink synchronization status is non-synchronized.

7. The method of claim 1, **characterized in that** performing the random access procedure corresponding to the uplink data arrival is performing the random access procedure when the user equipment has uplink data to transmit and no dedicated scheduling request channel is available.

8. The method of claim 1, **characterized in that** performing the random access procedure corresponding to the downlink data arrival is performing the random access procedure when the user equipment receives a downlink data arrival order from a base station.

9. A communications device (100) of a wireless communications system for accurately handling random access procedure failure in an RRC_CONNECTED state, the communications device (100) comprising:
a central processing unit (108) for executing a process (40); and
a memory (110) coupled to the processor (108), for storing the program code (112) used for executing the process (40);
wherein the process (40) comprises:
initiating a random access procedure corresponding to an uplink data arrival or a downlink data arrival (402); and
**characterized by** when the random access procedure is performed unsuccessfully, determining that a radio link failure is detected and then performing a radio link recovery procedure (404).

10. The communications device (100) of claim 9, **characterized in that** the radio link recovery procedure comprises:
selecting a base station; and
initiating a random access procedure corresponding to the radio link failure with the base station.

11. The communications device (100) of claim 10, **characterized in that** the random access procedure corresponding to the radio link failure comprises:
sending a user equipment identifier to the base station;
receiving a response indicating that the radio link recovery procedure is performed successfully and recovering a radio link with the base station when the user equipment identifier is found in the base station;
receiving a response indicating that the radio link recovery procedure is failed and entering an RRC_IDLE state when the user equipment identifier is not found in the base station; and
determining that the radio link recovery procedure is failed and entering the RRC_IDLE state when the radio link recovery procedure is not finished during a predetermined time.

12. The communications device (100) of claim 9, **characterized in that** the process (40) further comprises:
recovering a radio link when the radio link recovery procedure is successfully; and
entering the RRC_IDLE state when the radio link recovery procedure is failed.

13. The communications device (100) of claim 9, **characterized in that** the random access procedure is a contention based random access procedure.

14. The communications device (100) of claim 9, **characterized in that** performing the random access procedure corresponding to the uplink data arrival is performing the random access procedure when the communications device has uplink data to transmit and the uplink synchronization status is non-synchronized.

15. The communications device (100) of claim 9, **characterized in that** performing the random access procedure corresponding to the uplink data arrival is performing the random access procedure when the communications device has uplink data to transmit and no dedicated scheduling request channel is available.

16. The communications device (100) of claim 9, **characterized in that** performing the random access procedure corresponding to the downlink data arrival is performing the random access procedure when the communications device receives a downlink data arrival order from a base station.
